# EUROPEAN PATENT APPLICATION

(11) **EP 4 670 832 A1**
(43) Date of publication of application: **31.12.2025**
(21) Application number: 24760559.5
(22) Date of filing: 21.02.2024
(51) Int. Cl.: B01J 8/00, B01J 4/00, B01J 19/00, H01M 4/525, H01M 4/02

(54) **APPARATUS AND METHOD FOR PREPARING CATHODE ACTIVE MATERIAL PRECURSOR**

(30) Priority: 21.02.2023 KR 20230023164
(71) Applicant: Posco Future M Co., Ltd., Pohang-si, Gyeongsangbuk-do 37918 (KR)
(72) Inventor: CHOI, Seung Un, Gumi-si, Gyeongsangbuk-do 39171 (KR); LEE, Chang Hyun, Gumi-si, Gyeongsangbuk-do 39171 (KR); NAM, Gyeong Won, Gumi-si, Gyeongsangbuk-do 39171 (KR); JUNG, Kwang Eun, Gumi-si, Gyeongsangbuk-do 39171 (KR); JEUNG, Do Gak, Gumi-si, Gyeongsangbuk-do 39171 (KR); PARK, Jun Young, Gumi-si, Gyeongsangbuk-do 39171 (KR); LEE, Dong Young, Gumi-si, Gyeongsangbuk-do 39171 (KR); JANG, Hyun Seok, Gumi-si, Gyeongsangbuk-do 39171 (KR); KIM, Jeong Han, Gumi-si, Gyeongsangbuk-do 39171 (KR)
(74) Representative: Meissner Bolte Partnerschaft mbB
(86) International application number: PCT/KR2024/002236
(87) International publication number: WO 2024/177370

(57) **Abstract**

A positive electrode active material precursor manufacturing apparatus according to an embodiment may include: a reactor (100) to accommodate reactants; a supply unit (200) to supply the reactants into the reactor (100); and a solution discharge unit (300) to continuously discharge, outside the reactor (100), a precursor and a solution generated by reaction of the reactants. The solution discharge unit (300) may include: a solution discharge pipe (310) connected to a side wall (110) of the reactor (100) extending outside; a metal filter unit (320) in the solution discharge pipe (310) to separate the precursor from the solution; a nitrogen purge unit (330) to purge nitrogen into the metal filter unit (320); a shut-off unit (340) downstream of the nitrogen purge unit (330); and a vacuum pump (350) downstream of the shut-off unit (340), wherein the metal filter unit (320) is at one end of the solution discharge pipe (310).

## Description

### [FIELD OF THE INVENTION]

The present embodiments relate to a positive electrode active material precursor manufacturing apparatus and a method for manufacturing the same, and more particularly, to a manufacturing apparatus and method capable of continuously concentrating and manufacturing a positive electrode active material precursor in a single reactor.

### [BACKGROUND OF THE INVENTION]

With the recent explosive demand for electric vehicles and the growing need for increased driving range, the development of secondary batteries with high capacity and high energy density has been actively pursued worldwide. Lithium composite transition metal oxides containing transition metals such as nickel, cobalt, manganese, and aluminum are widely used as positive electrode active materials for lithium secondary batteries. The lithium composite transition metal oxide is typically produced by mixing a positive electrode active material precursor, in the form of a hydroxide or oxyhydroxide containing a transition metal, with a lithium raw material, followed by calcination.

Specifically, a positive electrode active material may be manufactured by producing the positive electrode active material precursor using a continuous stirred tank reactor (CSTR) and then calcining it together with a lithium raw material, or by producing the precursor using a batch-type reactor and then calcining it together with a lithium raw material. In the CSTR method, raw materials are fed into the reactor to perform coprecipitation, while the resulting precursor particles are simultaneously discharged. In the batch-type method, a predetermined amount of raw material is charged into the reactor and reacted for a certain time, and after the reaction is complete, the precursor is discharged. The batch-type process requires cleaning of the reactor and resetting of the initial conditions after each reaction cycle, resulting in low productivity.

In contrast, the use of a CSTR enables improvement in the productivity of the positive electrode active material precursor by continuously discharging the precursor while feeding the raw materials and performing coprecipitation. However, because the CSTR performs raw material feeding and product discharge simultaneously and continuously, the system configuration is complex, leading to increased system manufacturing costs and reduced efficiency in the use of installation space.

Furthermore, in the CSTR, there can be variations in the residence time and reaction time of the positive electrode active material precursor inside the reactor, which may cause deterioration in the particle size and particle size uniformity of the produced precursor. Therefore, there is a need to develop a manufacturing apparatus and method that can produce high-quality positive electrode active material precursors while improving productivity and enhancing the space utilization efficiency of the equipment.

### [TECHNICAL PROBLEM]

According to one embodiment of the present invention, it is intended to provide a manufacturing apparatus and a manufacturing method capable of continuously concentrating and manufacturing a positive electrode active material precursor in a single reactor.

### [TECHNICAL SOLUTION]

A positive electrode active material precursor manufacturing apparatus according to one embodiment of the present invention may include: a reactor (100) configured to accommodate reactants therein to cause a reaction; a supply unit (200) configured to supply the reactants into the reactor (100); and a solution discharge unit (300) configured to continuously discharge, to the outside of the reactor (100), a solution among a precursor and the solution generated by the reaction of the reactants inside the reactor (100). The solution discharge unit (300) may include: a solution discharge pipe (310) in communication with a side wall (110) of the reactor (100) and extending to the outside; a metal filter unit (320) located in the solution discharge pipe (310) to separate the positive electrode active material precursor from the solution; a nitrogen purge unit (330) configured to purge nitrogen into the metal filter unit (320); a shut-off unit (340) located downstream of the nitrogen purge unit (330); and a vacuum pump (350) located downstream of the shut-off unit (340), wherein the metal filter unit (320) may be located at one end of the solution discharge pipe (310) adjacent to the reactor (100).

The nitrogen purge unit (330) may include a first nitrogen purge unit (331) and a second nitrogen purge unit (332) respectively located on both sides of the metal filter unit (320) in the solution flow direction of the solution discharge pipe (310). The first nitrogen purge unit (331) may continuously inject nitrogen gas into one side of the metal filter unit (320) facing the reactor (100), and the nitrogen gas injection rate of the first nitrogen purge unit (331) may be in a range of 50 LPM to 100 LPM. When the reactants accommodated in the reactor (100) exceed the maximum liquid level (A1) of the reactor (100), the second nitrogen purge unit (332) may inject nitrogen gas into the other side of the metal filter unit (320) opposite to the side facing the reactor (100) to remove the precursor attached to the metal filter unit (320), and the nitrogen gas injection rate of the second nitrogen purge unit (332) may be in a range of 250 LPM to 500 LPM. The shut-off unit (340) may be closed prior to injection of nitrogen gas by the second nitrogen purge unit (332).

The maximum liquid level (A1) of the reactor (100) may be located above the portion where the side wall (110) of the reactor (100) communicates with and connects to the solution discharge pipe (310), and may be positioned within 1/10 from the upper end of the reactor (100). Unless the rise of the reactants affects the reaction inside the reactor (100), the position is not particularly limited. The solution discharge pipe (310) may be in communication with and connected to the reactor (100) at a position equal to or higher than 2/5 of the total height of the side wall (110) of the reactor (100).

The metal filter unit (320) may be fixed to the solution discharge pipe (310) by a fixing member that allows detachment and attachment, and is replaceable. The metal filter unit (320) may be formed by stacking metal filters having a pore size in the range of 0.2 µm to 0.8 µm. The apparatus may further include a control unit (500) configured to control the operation of the supply unit (200), the nitrogen purge unit (300), the shut-off unit (340), and the vacuum pump (350). When the operation of the vacuum pump (350) is stopped by the control unit (500), the shut-off unit (340) may be closed.

A method for manufacturing a positive electrode active material precursor according to another embodiment of the present invention may include: continuously feeding raw materials into a reactor, stirring and reacting them to form reactants; a solution discharging step of discharging, to the outside of the reactor, the solution in the reactor separated through a metal filter unit located in a solution discharge pipe in communication with a side wall of the reactor; and a nitrogen purging step of injecting nitrogen into the metal filter unit when the reactants in the reactor reach the maximum liquid level of the reactor, wherein the nitrogen purging step comprises injecting nitrogen into the solution discharge pipe such that the injected nitrogen flows toward the inside of the reactor within the solution discharge pipe.

The nitrogen purging step may comprise closing a shut-off unit located downstream of the solution discharge pipe and then injecting nitrogen at an injection rate of 250 LPM to 500 LPM. In the nitrogen purging step, the operation of a vacuum pump located downstream of the shut-off unit may be stopped prior to closing the shut-off unit.

In the solution discharging step, when the reactants in the reactor reach at least the lowest point of the connection portion of the solution discharge pipe that is in communication with and connected to the reactor side wall, the solution discharging may be performed by operating a vacuum pump located in the solution discharge pipe. In the solution discharging step, nitrogen gas may be continuously injected into one side of the metal filter unit facing the reactor, and the nitrogen gas may be injected at a rate in the range of 50 LPM to 100 LPM.

### [ADVANTAGEOUS EFFECTS]

According to one embodiment of the present invention, it is possible to manufacture a positive electrode active material precursor while continuously concentrating in a single reactor, thereby reducing capital investment costs due to simplified apparatus configuration. In addition, the simplified apparatus configuration provides the advantage of improved space utilization efficiency.

### [BRIEF DESCRIPTION OF THE DRAWINGS]

FIG. 1 is a schematic diagram illustrating the configuration of a positive electrode active material precursor manufacturing apparatus according to one embodiment of the present invention.
FIG. 2 is a schematic diagram illustrating a metal filter unit located inside a solution discharge pipe according to one embodiment of the present invention.
FIG. 3 is a schematic diagram illustrating a process of injecting nitrogen gas according to the operation of a nitrogen purge unit according to one embodiment of the present invention.
FIG. 4 is a schematic diagram illustrating the configuration of a positive electrode active material precursor manufacturing apparatus including a control unit.

### DETAILED DESCRIPTION OF THE EMBODIMENTS

In the description of the present invention, terms such as "first," "second," and "third" are used to describe various portions, components, regions, layers, and/or sections, but are not limited thereto. These terms are used merely to distinguish one portion, component, region, layer, or section from another portion, component, region, layer, or section. Accordingly, a "first" portion, component, region, layer, or section described below may be referred to as a "second" portion, component, region, layer, or section without departing from the scope of the present invention.

The technical terms used herein are intended only to describe specific embodiments and are not intended to limit the present invention. Unless the context clearly indicates otherwise, singular forms as used herein also include plural forms. The term "comprising" as used in the specification specifies the presence of a particular feature, region, integer, step, operation, element, and/or component, but does not preclude the presence or addition of one or more other features, regions, integers, steps, operations, elements, and/or components.

Unless otherwise defined, all terms including technical and scientific terms used herein have the same meaning as commonly understood by those of ordinary skill in the art to which the present invention pertains. Terms defined in generally used dictionaries shall be interpreted as having a meaning consistent with their meaning in the related art and the present disclosure, and shall not be interpreted in an idealized or overly formal sense unless expressly defined herein.

In the drawings, the sizes of individual components or particular parts thereof may be exaggerated, omitted, or schematically illustrated for the sake of convenience and clarity of explanation. Therefore, the size of each component does not necessarily reflect its actual size. Detailed descriptions of well-known functions or configurations that may unnecessarily obscure the gist of the present invention will be omitted.

Hereinafter, embodiments of the present invention will be described in detail. However, these embodiments are presented only by way of example and do not limit the present invention, which is defined only by the scope of the claims set forth below.

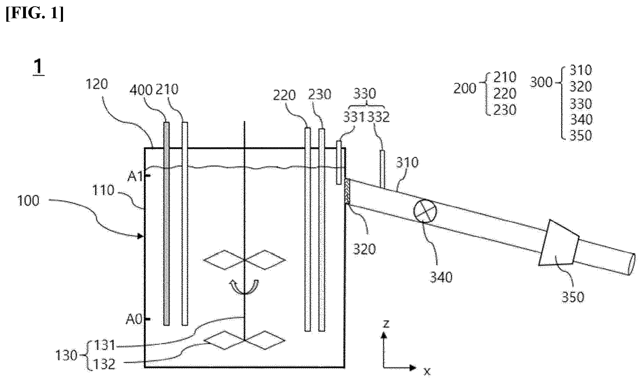

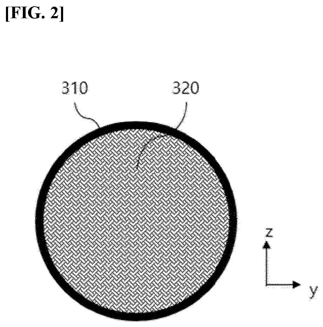

FIG. 1 is a schematic diagram illustrating the configuration of a positive electrode active material precursor manufacturing apparatus according to one embodiment of the present invention, and FIG. 2 is a schematic diagram illustrating a metal filter unit located inside a solution discharge pipe according to one embodiment of the present invention.

Hereinafter, with reference to FIGS. 1 and 2, a positive electrode active material precursor manufacturing apparatus according to one embodiment of the present invention will be described in detail.

The positive electrode active material precursor manufacturing apparatus according to one embodiment of the present invention may include: a reactor (100) configured to accommodate reactants therein to cause a reaction; a supply unit (200) configured to supply the reactants into the reactor (100); and a solution discharge unit (300) configured to continuously discharge, to the outside of the reactor (100), a solution among a precursor and the solution generated by the reaction of the reactants inside the reactor (100).

The reactor (100) may have a structure in which an internal space is formed to accommodate reactants, stirring members, and other necessary components. Specifically, the reactor may include a side wall (110) that extends upward from the perimeter of a bottom portion (not shown) to form an accommodation portion together with the bottom portion, and an upper cover (120) positioned to face the bottom portion and configured to prevent the reactants inside the reactor (100) from being released to the outside. The bottom portion and the side wall (110) may be welded together, and the upper cover (120) may cover the upper end of the side wall (110) using an additional fixing member.

At the center inside the reactor (100), a stirring unit (130) for mixing the reactants introduced therein may be disposed. The stirring unit (130) may include a stirring shaft (131) and stirring blades (132). The stirring unit (130) may rotate by operation of a driving unit (not shown) to stir the reactants accommodated inside the reactor (100). The driving unit (not shown) may be electrically connected to a control unit (500) described later, and may be started or stopped by the control unit (500), and its rotational speed may be adjustable. The stirring blades (132) may be provided in one or more pieces, and it is apparent that multiple blades may be arranged at different heights depending on the size of the reactor and the process requirements.

In addition, the reactor (100) may be provided with a level gauge (not shown) configured to measure a minimum liquid level (A0) and a maximum liquid level (A1) in the vertical height direction from the bottom to the top. The minimum liquid level (A0) corresponds to the minimum amount of reactants required to initiate the precursor manufacturing reaction, while the maximum liquid level (A1) serves as a reference for determining whether to operate a second nitrogen purge unit (332) described later. Details regarding this will be provided in the following description of the solution discharge unit (300).

Furthermore, the reactor (100) may include a pH sensor unit (400) to adjust the reaction conditions.

The supply unit (200) may be positioned around the stirring unit (130). In the drawings, a first raw material supply unit (210) and a second raw material supply unit (220) are illustrated separately for convenience of explanation; however, materials may be supplied through a single supply unit, or additional supply units may be provided to individually supply various materials. The apparatus may further include a nitrogen supply unit (230) for removing dissolved oxygen from the reactants introduced into the reactor (100). Each supply unit (200) may have its start, stop, and supply rate of each reactant controlled by the control unit (500) described later. Furthermore, the positions of the supply units may be arranged with their relative positions adjusted as needed.

The solution discharge unit (300) may include: a solution discharge pipe (310) in communication with the side wall (110) of the reactor (100) and extending to the outside; a metal filter unit (320) located in the solution discharge pipe (310) to separate the positive electrode active material precursor from the solution; a nitrogen purge unit (330) for purging nitrogen into the metal filter unit (320); a shut-off unit (340) located downstream of the nitrogen purge unit (330); and a vacuum pump (350) located downstream of the shut-off unit (340).

In the present description, the terms "upstream/front" and "downstream/rear" are used to refer to positions relative to the flow direction of the solution discharged from the reactor to the outside.

The solution discharge pipe (310) may be in the form of piping, without particular limitation, as long as it allows the smooth discharge of the solution to the outside of the reactor (100). The solution discharge pipe (310) may penetrate the side wall (110) of the reactor (100) so that the internal space of the reactor (100) communicates with the internal space of the solution discharge pipe (310).

Inside the solution discharge pipe (310), the metal filter unit (320) may be disposed to cover the entire cross-section of the portion of the solution discharge pipe (310) in communication with the side wall (110) of the reactor (100). The metal filter unit (320) may be formed by stacking multiple metal filters, and the pore size of the metal filter may be from 0.1 µm to 1.0 µm, specifically from 0.2 µm to 0.8 µm, and more specifically from 0.4 µm to 0.6 µm. When the pore size of the metal filter falls within the above range, it is advantageous in smoothly discharging the solution to the outside of the reactor while preventing the loss of the produced positive electrode active material precursor to the outside.

The metal filter unit (320) may be fixed to the solution discharge pipe (310) by a fixing member that allows detachment and attachment. When replacement is required, the metal filter unit (320) may be replaced with a new metal filter unit (320) by detaching the fixing member. The fixing member may include fixing holes formed in both the metal filter unit (320) and the solution discharge pipe (310) and members fitted into the fixing holes, or may be a locking-type fixing member. The fixing member is not particularly limited as long as it can fix the metal filter unit (320) to the solution discharge pipe (310) so that only the solution in the reactor (100) is discharged to the outside through the solution discharge pipe (310) while the positive electrode active material precursor remains in the reactor (100).

In addition, the metal filter unit (320) may be detachably fixed to the side wall (110) of the reactor (100). Specifically, the metal filter unit (320) may be positioned to cover the entire connecting portion where the reactor (100) communicates with the solution discharge pipe (310). This arrangement is advantageous for separating the solution in the reactor (100) and discharging it to the outside through the solution discharge pipe (310).

Although not shown in the drawings, a level gauge may additionally be located at the lowest point of the connection portion between the solution discharge pipe (310) and the side wall (110) of the reactor (100). This level gauge may be electrically connected to the control unit (500) described later. When the height of the reactants charged into the reactor (100) reaches this lowest point, the control unit (500) can operate the vacuum pump (350).

The nitrogen purge unit (330) may serve to prevent the positive electrode active material precursor from adhering to the metal filter unit (320) or to remove the precursor attached to the metal filter unit (320). Specifically, the nitrogen purge unit (330) may include a first nitrogen purge unit (331) and a second nitrogen purge unit (332), respectively disposed on both sides of the metal filter unit (320) in the solution flow direction of the solution discharge pipe (310).

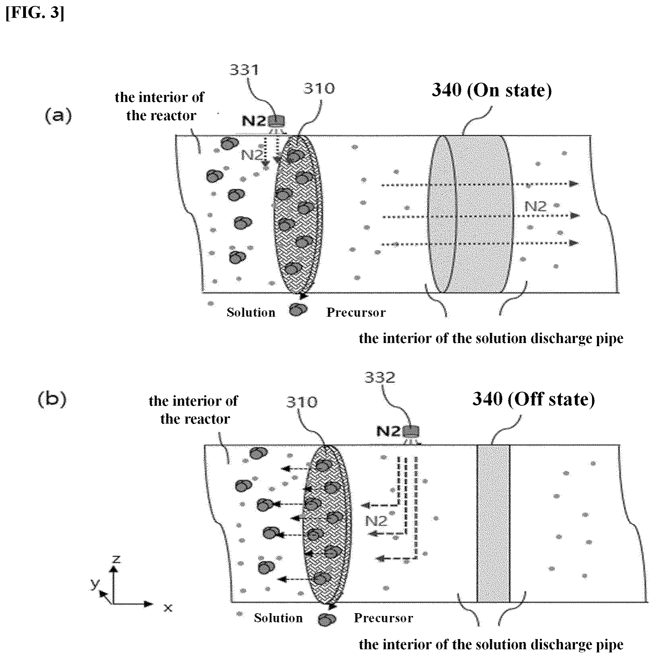

Referring to the schematic diagram of the process of injecting nitrogen gas by operating the first nitrogen purge unit (331) in FIG. 3(a), the first nitrogen purge unit (331) may continuously inject nitrogen gas into one side of the metal filter unit (320) facing the reactor (100) to disperse the positive electrode active material precursor, allowing it to flow with the solution into the solution discharge pipe (310), or to prevent it from adhering to the metal filter unit (320). The nitrogen gas injection rate of the first nitrogen purge unit (331) may be in the range of 50 LPM to 100 LPM. When the nitrogen gas injection rate is within this range, it is advantageous in effectively dispersing the positive electrode active material precursor without affecting the reaction of the reactants in the reactor (100), thereby preventing or inhibiting adhesion to the metal filter unit (320).

In this case, the shut-off unit (340) described later may remain in an open state, and the vacuum pump (350) described later may be in operation.

In FIG. 1, the first nitrogen purge unit (331) is shown as penetrating the upper cover (120) of the reactor (100) and being positioned above the portion where the side wall (110) of the reactor (100) and the solution discharge pipe (310) are connected in communication. However, if necessary, it may penetrate the solution discharge pipe (310) and be positioned in front of the metal filter unit (320). It may also directly inject nitrogen into the metal filter unit (320). By injecting nitrogen gas through the first nitrogen purge unit (331), it is possible to prevent or inhibit the positive electrode active material precursor in the reactor (100) from adhering to the metal filter unit (320).

Although the first nitrogen purge unit (331) is illustrated as being vertically positioned in FIG. 1, it may be positioned at a predetermined angle in an inclined orientation. In addition, the distal end nitrogen gas outlet of the first nitrogen purge unit (331) may be provided with multiple branch pipes, specifically including opposing branch pipes. This arrangement is advantageous for dispersing the positive electrode active material precursor contained in the solution flowing into the solution discharge pipe (310), thereby preventing the precursor from adhering to the metal filter unit (320).

The second nitrogen purge unit (332) may be disposed so as to penetrate the solution discharge pipe (310), specifically between the metal filter unit (320) and the shut-off unit (340) described later, and may inject nitrogen gas into the solution discharge pipe (310). The second nitrogen purge unit (332) may inject nitrogen gas into the opposite side of the metal filter unit (320) from the side facing the reactor (100). Specifically, when the reactants accommodated in the reactor (100) exceed the maximum liquid level (A1) of the reactor (100), nitrogen gas may be injected into the opposite side of the metal filter unit (320) from the side facing the reactor (100) to remove the precursor attached to the metal filter unit (320).

When the solution in the reactor (100) is discharged to the outside through the solution discharge pipe (310), the positive electrode active material precursor produced in the reactor (100) may adhere to the metal filter unit (320). As the amount of adhered precursor increases, the solution discharge rate decreases, causing the level of reactants in the reactor (100) to rise. When the level of reactants in the reactor (100) rises to the maximum liquid level (A1), the shut-off unit (340) described later may be closed and the second nitrogen purge unit (332) may be operated to inject nitrogen gas.

Referring to the schematic diagram of the process of injecting nitrogen gas by operating the second nitrogen purge unit (332) in FIG. 3(b), when the level of reactants in the reactor (100) increases and reaches the maximum liquid level (A1) of the reactor (100), the operation of the vacuum pump (350) described later may be stopped, the shut-off unit (340) may be closed, and then the second nitrogen purge unit (332) may be operated to inject nitrogen gas. The nitrogen gas injected from the second nitrogen purge unit (332) may move toward the inside of the reactor (100) and remove the positive electrode active material precursor attached to the metal filter unit (320).

In this case, the nitrogen gas injection rate of the second nitrogen purge unit (332) may be in the range of 100 LPM to 1000 LPM, specifically in the range of 250 LPM to 500 LPM, and the injection time may be in the range of 0.1 seconds to 1 second. When the nitrogen gas injection rate and the injection time are within the above ranges, the attached positive electrode active material precursor on the metal filter unit (320) can be effectively removed while minimizing the impact on the positive electrode active material precursor manufacturing process.

The reactor (100) and the solution discharge pipe (310) may be connected in communication at a position on the side wall (110) of the reactor (100) below the maximum liquid level (A1) of the reactor (100). In addition, the reactor (100) and the solution discharge pipe (310) may be connected in communication at a position equal to or higher than 2/5 of the total height of the side wall (110) of the reactor (100). This configuration is advantageous for improving the productivity of the entire manufacturing apparatus.

The solution discharge pipe (310) may be positioned to slope downward from the reactor (100) toward the outside of the reactor (100) with respect to the horizontal plane. This configuration is advantageous for discharging the solution from the inside of the reactor (100) to the outside through the solution discharge pipe (310) after the solution passes through the metal filter unit (320). The solution discharge pipe (310) may also be positioned horizontally or in other orientations depending on space constraints or other requirements.

A vacuum pump (350) may be located in the solution discharge pipe (310), specifically downstream of the shut-off unit (340). The operation of the vacuum pump (350) is advantageous for separating and discharging the solution from the reactor (100) to the outside.

The solution that passes through the metal filter unit (320) and is discharged to the outside through the solution discharge pipe (310) may be stored in a separate storage tank or directly introduced into a wastewater treatment facility.

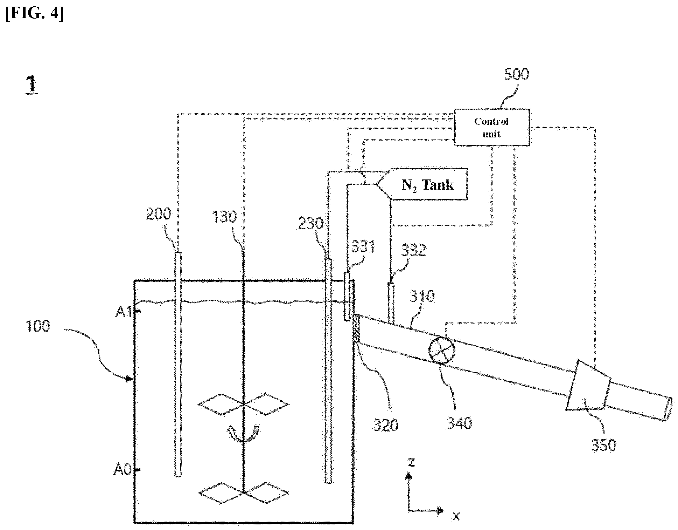

FIG. 4 is a schematic diagram illustrating the configuration of a positive electrode active material precursor manufacturing apparatus including a control unit.

Referring to FIG. 4, the positive electrode active material precursor manufacturing apparatus according to one embodiment of the present invention may include a control unit (500). The control unit (500) may be electrically connected to the supply unit (200), the nitrogen purge unit (300), the shut-off unit (340), the vacuum pump (350), and a level gauge (not shown).

When the reactants in the reactor (100) reach the maximum liquid level (A1), the control unit (500), through electrical connection with the level gauge (not shown) located at the maximum liquid level (A1), may stop the operation of the vacuum pump (350) and/or close the shut-off unit (340), and then operate the second nitrogen purge unit (332) to inject nitrogen. The nitrogen injection rate and injection time are as described above and will not be repeated here.

In another embodiment of the present invention, a method for manufacturing a positive electrode active material precursor may be provided, and specifically, the method may be implemented using the positive electrode active material precursor manufacturing apparatus described above.

The method for manufacturing a positive electrode active material precursor according to the present invention may include: continuously feeding raw materials into a reactor, stirring and reacting the raw materials to form reactants; a solution discharging step of discharging, to the outside of the reactor, the solution in the reactor separated through a metal filter unit located in a solution discharge pipe in communication with a side wall of the reactor; and a nitrogen purging step of injecting nitrogen into the metal filter unit when the reactants in the reactor reach the maximum liquid level of the reactor, wherein the nitrogen purging step may comprise injecting nitrogen into the solution discharge pipe such that the injected nitrogen flows toward the inside of the reactor within the solution discharge pipe.

First, the method for manufacturing a positive electrode active material precursor may include a step of continuously feeding raw materials into a reactor and stirring and reacting them to form reactants. The manufacturing raw materials for the positive electrode active material precursor according to the present invention may mainly include a metal element-containing raw material, an ammonia-containing raw material, and caustic soda, and may further include additional raw materials as needed. In the drawings of the present invention, the supply units for the manufacturing raw materials are classified into a first raw material supply unit and a second raw material supply unit only for convenience of description, and the manufacturing raw materials may be supplied separately through any supply unit or simultaneously through a single supply unit. Although not shown in the drawings, additional supply units may be further provided, if necessary, to separately supply additional raw materials.

The metal element-containing raw material may be one or more selected from metal oxides, metal salts, or metal hydroxides, and is not particularly limited as long as it is applicable to the positive electrode active material precursor of a lithium secondary battery. The supply rate of the metal element-containing raw material may be from 300 to 2500 kg/h, and may be maintained at a constant rate or varied in sections, without particular limitation, as long as it enables effective manufacture of the positive electrode active material precursor intended in the present invention.

The supply rate of the ammonia-containing raw material may be from 10 to 200 kg/h. The ammonia-containing raw material may be an NH₄OH solution, and is not particularly limited as long as it enables effective manufacture of the positive electrode active material precursor intended in the present invention.

Meanwhile, the caustic soda (NaOH) solution may be supplied at a rate of 100 to 2000 kg/h. The ammonia-containing raw material and caustic soda may be supplied at a constant rate within the above supply rate ranges or at a variable rate in sections, without particular limitation, as long as they enable effective manufacture of the positive electrode active material precursor intended in the present invention.

In the present invention, it is preferable to feed the raw material solution into the reactor such that it reaches at least the minimum liquid level (A0) of the reactor to manufacture the positive electrode active material precursor. Maintaining the liquid level at or above the minimum liquid level (A0) is advantageous for manufacturing a positive electrode active material precursor with uniform quality.

In addition, the stirring unit may be operated simultaneously with the feeding of the raw material solution into the reactor to stir the fed raw material solutions. The stirring speed may be in the range of 10 to 2000 rpm, specifically from 50 to 300 rpm, without particular limitation, as long as smooth stirring enables the manufacture of the positive electrode active material precursor intended in the present invention.

At this time, nitrogen may be purged through the nitrogen supply unit (230) at a rate of 80 to 150 LPM to remove dissolved oxygen from the raw material solution.

When the feeding of the raw material solution into the reactor (100) is initiated, the shut-off unit (340) located in the solution discharge pipe (310) connected in communication with the reactor (100) may be maintained in an open state.

When the level of reactants inside the reactor (100) rises to at least the lowest point of the connection portion between the side wall (110) of the reactor (100) and the solution discharge pipe (310), nitrogen may be purged through the first nitrogen purge unit (331) to the front side surface of the metal filter unit (320) (based on the flow direction of the solution from the reactor to the outside) at an injection rate in the range of 50 LPM to 100 LPM. Additionally, nitrogen may be purged directly to the metal filter unit (320) from the upper side. This can disperse the positive electrode active material precursor and prevent or inhibit its adhesion to the metal filter unit (320), thereby allowing only the solution inside the reactor (100) to be efficiently discharged to the outside and enabling continuous manufacture of the positive electrode active material precursor while concentrating it.

When the level of reactants inside the reactor (100) rises to at least the lowest point of the connection portion between the side wall (110) of the reactor (100) and the solution discharge pipe (310), the vacuum pump (350) may be operated. At this time, an electrical signal from a level gauge located at the lowest point may be transmitted to the control unit (500), and the control unit (500) may control the operation of the vacuum pump (350) accordingly.

When the level of reactants inside the reactor (100) reaches the maximum liquid level (A1) of the reactor (100), the control unit (500), based on an electrical signal from a level gauge (not shown) located at the maximum liquid level (A1), may stop the operation of the vacuum pump (350), close the shut-off unit (340), and then operate the second nitrogen purge unit (332) to inject nitrogen gas. The nitrogen gas injection rate of the second nitrogen purge unit (332) may be in the range of 100 LPM to 1000 LPM, specifically from 250 LPM to 500 LPM, and the injection time may be in the range of 0.1 seconds to 1 second. The nitrogen gas injected from the second nitrogen purge unit (332) may move toward the inside of the reactor (100) while passing through the metal filter unit (320) to remove the positive electrode active material precursor attached thereto. The nitrogen gas injection operation of the second nitrogen purge unit (332) may be performed one or more times consecutively, without particular limitation.

Reaching the maximum liquid level (A1) inside the reactor (100) is considered to result from adhesion of the positive electrode active material precursor to the metal filter unit (320), which prevents smooth discharge of the solution to the outside. Therefore, as described above, by closing the shut-off unit (340) and then operating the second nitrogen purge unit (332) to inject nitrogen gas, the injected nitrogen gas passes through the metal filter unit (320) and enters the reactor (100), thereby removing the positive electrode active material precursor attached to the metal filter unit (320). The advantages of the above-mentioned nitrogen gas injection rate and injection time ranges have been previously described and will not be repeated here.

After completing nitrogen gas injection from the second nitrogen purge unit (332), the shut-off unit (340) may be opened and the vacuum pump (350) may be operated.

In the present invention, when the mass of solids in the reactor (100) reaches 5% to 65% of the total mass of the reactants, the reaction may be terminated, followed by solid-liquid separation and subsequent processing to produce the positive electrode active material precursor.

Although the positive electrode active material precursor manufacturing apparatus according to the present invention has been described with reference to the illustrated drawings, the present invention is not limited to the embodiments and drawings described above, and may be implemented in various other forms. It will be understood by those skilled in the art that various modifications and changes can be made without departing from the technical spirit or essential characteristics of the present invention.

### Explanation of Reference Numerals

1: Positive electrode active material precursor manufacturing apparatus
100: Reactor
110: Side wall
120: Upper cover
130: Stirring unit
131: Stirring shaft
132: Stirring blade
200: Supply unit
210: First raw material supply unit
220: Second raw material supply unit
230: Nitrogen supply unit
300: Solution discharge unit
310: Solution discharge pipe
320: Metal filter unit
330: Nitrogen purge unit
331: First nitrogen purge unit
332: Second nitrogen purge unit
340: Shut-off unit
350: Vacuum pump
400: pH sensor unit
A0: Minimum liquid level
A1: Maximum liquid level

## Claims

1. A positive electrode active material precursor manufacturing apparatus comprising: a reactor (100) accommodating reactants therein to cause a reaction; a supply unit (200) configured to supply the reactants into the reactor (100); and a solution discharge unit (300) configured to continuously discharge, to the outside of the reactor (100), a solution among a precursor and the solution generated by the reaction of the reactants inside the reactor (100), wherein the solution discharge unit (300) comprises: a solution discharge pipe (310) in communication with a side wall (110) of the reactor (100) and extending to the outside; a metal filter unit (320) located in the solution discharge pipe (310) and separating the positive electrode active material precursor from the solution; a nitrogen purge unit (330) for purging nitrogen into the metal filter unit (320); a shut-off unit (340) located downstream of the nitrogen purge unit (330); and a vacuum pump (350) located downstream of the shut-off unit (340), wherein the metal filter unit (320) is located at one end of the solution discharge pipe (310) adjacent to the reactor (100).

2. The positive electrode active material precursor manufacturing apparatus of claim 1, wherein the nitrogen purge unit (330) comprises a first nitrogen purge unit (331) and a second nitrogen purge unit (332) respectively located on both sides of the metal filter unit (320) in the solution flow direction of the solution discharge pipe (310).

3. The positive electrode active material precursor manufacturing apparatus of claim 2, wherein the first nitrogen purge unit (331) continuously injects nitrogen gas into one side of the metal filter unit (320) facing the reactor (100).

4. The positive electrode active material precursor manufacturing apparatus of claim 2, wherein the nitrogen gas injection rate of the first nitrogen purge unit (331) is in a range of 50 LPM to 100 LPM.

5. The positive electrode active material precursor manufacturing apparatus of claim 2, wherein when the reactants accommodated in the reactor (100) exceed the maximum liquid level (A1) of the reactor (100), the second nitrogen purge unit (332) injects nitrogen gas into the other side of the metal filter unit (320) opposite to the side facing the reactor (100) to remove the precursor attached to the metal filter unit (320).

6. The positive electrode active material precursor manufacturing apparatus of claim 5, wherein the nitrogen gas injection rate of the second nitrogen purge unit (332) is in a range of 250 LPM to 500 LPM.

7. The positive electrode active material precursor manufacturing apparatus of claim 5, wherein the shut-off unit (340) is closed prior to injection of nitrogen gas by the second nitrogen purge unit (332).

8. The positive electrode active material precursor manufacturing apparatus of claim 5, wherein the maximum liquid level (A1) of the reactor (100) is located above the portion where the side wall (110) of the reactor (100) communicates with and connects to the solution discharge pipe (310).

9. The positive electrode active material precursor manufacturing apparatus of claim 1, wherein the solution discharge pipe (310) is in communication with and connected to the reactor (100) at a position equal to or higher than 2/5 of the total height of the side wall (110) of the reactor (100).

10. The positive electrode active material precursor manufacturing apparatus of claim 1, wherein the metal filter unit (320) is fixed to the solution discharge pipe (310) by a fixing member that allows detachment and attachment, and is replaceable.

11. The positive electrode active material precursor manufacturing apparatus of claim 1, wherein the metal filter unit (320) is formed by stacking metal filters having a pore size in the range of 0.2 µm to 0.8 µm.

12. The positive electrode active material precursor manufacturing apparatus of claim 1, further comprising a control unit (500) configured to control the operation of the supply unit (200), nitrogen purge unit (300), shut-off unit (340), and vacuum pump (350).

13. The positive electrode active material precursor manufacturing apparatus of claim 12, wherein when the operation of the vacuum pump (350) is stopped by the control unit (500), the shut-off unit (340) is closed.

14. A method for manufacturing a positive electrode active material precursor, comprising: continuously feeding raw materials into a reactor, stirring and reacting them to form reactants; discharging, to the outside of the reactor, the solution in the reactor separated through a metal filter unit located in a solution discharge pipe in communication with a side wall of the reactor; and performing a nitrogen purging step of injecting nitrogen into the metal filter unit when the reactants in the reactor reach the maximum liquid level of the reactor, wherein the nitrogen purging step comprises injecting nitrogen into the solution discharge pipe such that the injected nitrogen flows toward the inside of the reactor within the solution discharge pipe.

15. The method of claim 14, wherein the nitrogen purging step comprises closing a shut-off unit located downstream of the solution discharge pipe and then injecting nitrogen at an injection rate of 250 LPM to 500 LPM.

16. The method of claim 15, wherein in the nitrogen purging step, operation of a vacuum pump located downstream of the shut-off unit is stopped prior to closing the shut-off unit.

17. The method of claim 14, wherein in the solution discharging step, when the reactants in the reactor reach at least the lowest point of the connection portion of the solution discharge pipe that is in communication with and connected to the reactor side wall, a vacuum pump located in the solution discharge pipe is operated to perform the discharge.

18. The method of claim 14, wherein in the solution discharging step, nitrogen gas is continuously injected into one side of the metal filter unit facing the reactor.

19. The method of claim 18, wherein the nitrogen gas is injected at a rate in the range of 50 LPM to 100 LPM.
